Europäisches Patentamt

European Patent Office

Office européen des brevets

(19)

(11) Publication number: **0 026 883**
A2

(12) # EUROPEAN PATENT APPLICATION

(21) Application number: **80105838.9**

(22) Date of filing: **26.09.80**

(51) Int. Cl.³: **C 03 C 27/10, B 32 B 15/08, B 32 B 17/10**

(30) Priority: **03.10.79 IT 4161879**

(43) Date of publication of application: **15.04.81**
**Bulletin 81/15**

(84) Designated Contracting States: **AT BE CH DE FR GB LI LU NL SE**

(71) Applicant: **Bertolini, Raffaello, Via Dell'Atleta, 12, I-35042 Este (Padova) (IT)**

(72) Inventor: **Bertolini, Raffaello, Via Dell'Atleta, 12, I-35042 Este (Padova) (IT)**

(74) Representative: **Racheli, Adele, ING. A. RACHELI & C. Viale San Michele del Carso 4, I-20144 Milano (IT)**

(54) Long life unaltered mirrors and their manufacturing process.

(57) Both flat and curved mirrors for long life at unaltered state under ay atmospheric condition a first glass plate (1), having on one surface thereof one or more layers of conventional metal coating (2) whereby said sheet is rendered reflective, said coating being limited to only the central zone of the mirror, thus leaving free one edge (10) throughout the periphery of said first glass plate (1), applying a sheet (3) of polyvinylbutyral (PVB) on said surface of the first glass plate (1) carrying the metal coating (2) and in a known manner causing a second glass plate (4) to adhere through said PVB sheet (3) to said first glass plate (1) made reflective.

0026883

Applicant:

RAFFAELLO BERTOLINI

I - 35042 ESTE (Padova)

"LONG LIFE UNALTERED MIRRORS AND THEIR MANUFACTURING
PROCESS".

This invention relates to mirrors capable of withstanding
difficult atmospheric conditions. They are particularly used,
for example, as solar mirrors in systems for the utilization
of solar energy.

So far, one of the difficulties in utilization of solar energy
also resides in that mirrors for reflecting the sunbeams get
very quickly deteriorated, so that in a short time the efficiency
thereof degrades and a frequent cost investment is required
for replacement thereof.

Many attempts have been made to overcome this drawback, but
without any of them fully attaining xhe desired purpose.

- 2 -

The lack of safety is a further drawback of present mirrors, particularly during industrial handling thereof, that is when being used for example as solar mirrors in systems for utilizing solar energy.

Finally, it is an actual further drawback that the mirror and relevant mirror-holder devices are very heavy; this necessitates the construction of very strong and accordingly expensive supports or mountings.

Therefore, it is the primary object of the present invention to provide a novel mirror which is substantially unalterable in time.

It is a still further object of the present invention to provide reflective devices, the total weight of which including mirror and relevant mounting is reduced with respect to those hitherto obtained.

The above specified objects have been achieved according to a process contemplating the provision of a mirror comprising a first glass plate, one surface of which is conventionally processed only at its central portion for reflection thereof, that is leaving fee or unprocessed all the perimetral edge of said first glass plate, then a sheet of polyvinylbutyral is applied to the processed side of said first glass plate, while a second glass plate is applied to the polyvinylbutyral sheet and caused to adhere to said first sheet, as well known in the art of safety glasses.

The present invention also relates to a mirror as obtained by the above described method, that is comprising two glass sheet, of which one has been processed at only the central portion thereof as usually provided for making a reflecting mirror, and a sheet of polyvinylbutyral which is interposed between said two glass sheets, that are thereby caused to adhere to each other.

The present invention provides the making of both flat and curved mirrors.

The invention will now be more clearly explained in connection with an exemplary embodiment which has been shown in the accompanying drawing, in which:

Fig. 1 is an exploded perspective view of a mirror according to the present invention; and

Fig. 2 is an enlarged sectional view showing a portion of mirror according to the present invention, comprising a central zone portion and an edge portion.

Referring to the figures of the accompanying drawing, it will be seen that reference numeral 1 denotes a first flat or curved glass sheet, and 2 a coating of silver- and copper-plating for deflection. This silver- and copper-plating process will be carried out as usually or in any other suitable manner for

0026883

- 4 -

providing a good reflecting effect. How this reflecting layer has been provided is quite unimportant; what is important is that this layer should cover only the central zone of glass plate 1, that is it should not pass the broken line L defining the boundary of the reflecting coating.

Thus, a free edge 10 is formed throughout the periphery of said glass plate 1.

On the surface having the reflecting coating is applied a sheet 3 of polyvinylbutyral, on which is then placed a second glass plate 4 which is such as to cover at least all the surface of said glass plate 1, including said edge 10. Therefore, an edge portion 40 thereof will be facing the edge 10 of sheet 1, so that edges 10 and 40, both of which are unprocessed, will adhere to each other through said sheet 3 of polyvinylbutyral, thus forming an inseparable joint which will resist weathering for a long period of time.

The mirror thus obtained has a very long life under any atmospheric condition and at the same time is also a safety mirror that can be easily handled due to its inherent resistance, which is the result of the polyvinylbutyral sheet therein contained. It should also bp noted that a mirror provided according to the preset invention does not require to be placed on a suitable mounting, because the glass obtained is very strong and can be directly positioned without any mounting. This mirror can also be made with very light glass thicknesses, so that quite reduced weights can be obtained. Therefore, a much simplified supporting or mounting structure will be required with respect to conventional mirrors.

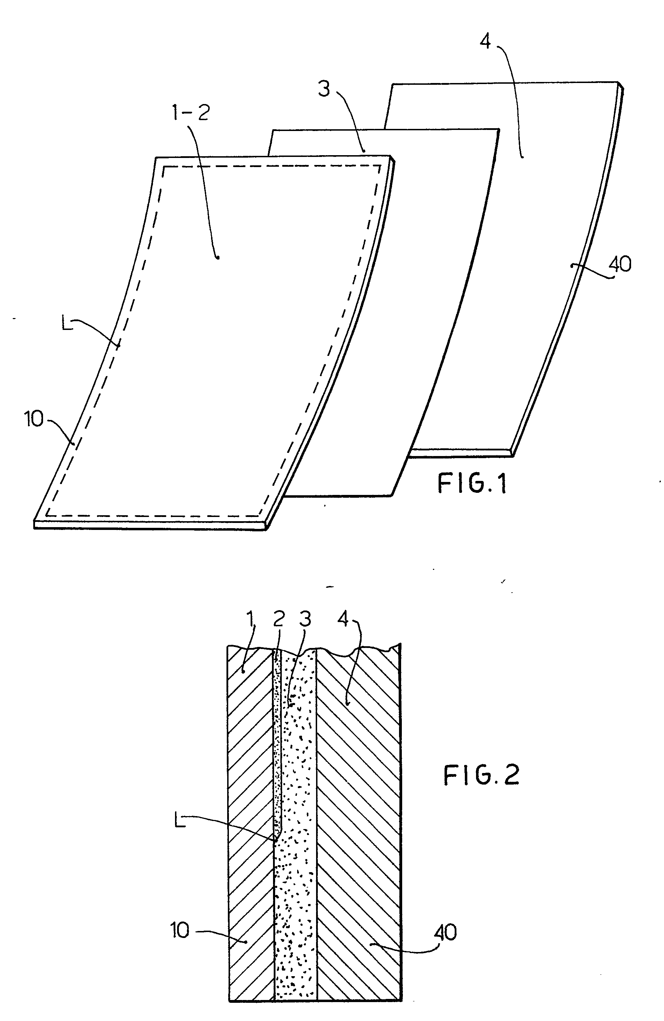

The invention comprises all of those changes in detail that may occur as obvious changes to those skilled in the art. Particularly, the provision of the silver- copper-plating or the like for rendering reflective the glass may be carried out in any manner, provided that it would not pass the boundary L indicated in Fig. 1. Furthermore, the mirrors may be flat or curved and have the desired thicknesses. Finally, the connection of the two glass sheets 1 and 4 by means of polyvinylbutyral sheet 3 is effected by known techniques since long used in the art of safety glasses.

0026883

- 6 -

Applicant:
RAFFAELLO BERTOLINI
I - 35042 ESTE (Padova)

C L A I M S

1.    A process for manufacturing mirrors, according to which a surface of a glass plate is processed by known methods to render it reflecting, characterized in that said processes for rendering reflecting the glass plate are effected only  at a central zone of said glass plate (1), that is leaving free or unprocessed an entire perimetral zone (10) of said first glass plate (1), applying on said partially processed surface a sheet of polyvinylbutyral (3), then another glass plate (4) which is made to adhere permanently through said sheet of polyvinylbutyral (3) to the first glass plate (1), as well known in the art of safety glasses.

2.    A mirror as provided by the process according to Claim 1, characterized by comprising two glass plate (1 and 4) joined to each other by a sheet of polyvinylbutyral (3), one (1) of said sheets being conventionally processed on its central surfae facing said sheet of polyvinylbutyral (3) so as to

- 7 -

obtain the desired reflecting effect and leav leav free an
unprocessed peripheral edge (10) which will directly contact
a portion of said sheet of polyvinylbutyral (3).

FIG.1

FIG.2